# EUROPÄISCHE PATENTSCHRIFT

(11) **EP 2 103 244 B1**
(45) Veröffentlichungstag und Bekanntmachung des Hinweises auf die Patenterteilung: **20.06.2012**
(21) Anmeldenummer: 08153116.2
(22) Anmeldetag: 20.03.2008
(51) Int. Cl.: A47L 11/40, A47L 11/30, B01J 49/00

(54) **Bodenreinigungsmaschine mit einer Wasserenthärtungseinrichtung**
Floor cleaning machine with a water softening device
Machine de nettoyage de sol dotée d'un dispositif d'adoucissement d'eau

(43) Veröffentlichungstag der Anmeldung: 23.09.2009
(73) Patentinhaber: Hako-Werke GMBH, D-23843 Bad Oldesloe (DE)
(72) Erfinder: Gosebruch, Dr. Harald, 22926 Ahrensburg (DE); Jessen, Frank, 23829 Wittenborn (DE)
(74) Vertreter: UEXKÜLL & STOLBERG

(56) Entgegenhaltungen:
- EP-A- 0 387 446
- DE-A1- 2 630 164
- US-A- 3 612 353
- US-A- 5 946 769
- US-A- 6 030 464

## Beschreibung

Die vorliegende Erfindung betrifft eine Bodenreinigungsmaschine mit einem Gehäuse, an dem ein Fahrwerk vorgesehen ist zum Bewegen der Maschine über eine zu reinigende Bodenfläche, einem in dem Gehäuse untergebrachten Frischwassertank, einer an dem Gehäuse angebrachten Reinigungseinheit, die ausgestaltet ist, in Kontakt mit der zu reinigenden Bodenfläche zu kommen, wobei die Reinigungseinheit mit dem Frischwassertank verbunden ist, sowie ein Verfahren zum Betrieb einer Bodenreinigungsmaschine.

Eine derartige Bodenreinigungsmaschine ist beispielsweise aus der EP 0 387 446 A1 bekannt. Hierbei wird im Betrieb Wasser aus einem Frischwassertank einer Reinigungseinheit zugeführt, die rotierende Bürsten aufweist, sodass durch Zusammenwirken der Bürsten mit dem zugeführten Wasser, dem außerdem ein Reinigungsmittel zugesetzt wird, eine Bodenfläche gereinigt werden kann. Zwar wird mit derartigen Maschinen eine ausreichende Reinigungswirkung erzielt, aber es tritt das Problem auf, dass ein vergleichsweise hoher Reinigungsmittelverbrauch stattfindet.

Dies ist zum einen in Hinblick auf Umweltschutzaspekte nachteilhaft, und außerdem führt dies zu nicht unerheblichen Betriebskosten. Ein weiteres Problem, das sich bei der Verwendung einer großen Menge von Reinigungsmittel auf einer Bodenfläche ergibt, sind dort verbleibende Reinigungsmittelreste. Diese führen dazu, dass Schmutz schnell wieder anhaftet, also eine erhöhte sogenannte Wiederanschmutzung gegeben ist. Auch Rückstände von Kalk oder anderen, im Leitungswasser enthaltenen Mineralien können auf dem Boden zurückbleiben und zu Schichtenaufbau oder schnellerer Wiederanschmutzung führen.

Die US 5,946769 A beschreibt eine Bodenreinigungsmaschine gemäß dem Oberbegriff des Anspruchs 1. Es ist bei der darin beschriebenen Bodenreinigungsmaschine eine Ionenaustauschereinheit vorgesehen, die das Reinigungswasser enthärtet. Problematisch dabei ist, dass sich die Ionenaustauschereinheit verbraucht und nach Verbrauch ausgetauscht werden muss.

Ausgehend vom Stand der Technik liegt der vorliegenden Erfindung daher die Aufgabe zugrunde, eine Bodenreinigungsmaschine bereitzustellen, die zumindest eine Reduzierung des Reinigungsmittelbedarfs ermöglicht und ein dauerhafter Betrieb auf einfache Weise gewährleistet wird.

Diese Aufgabe wird vorrichtungsmäßig dadurch gelöst, dass der Eingang der Ionenaustauschereinheit mit einer Regenerationseinheit verbunden ist und eine Bypass-Leitung vorgesehen ist, durch die Frischwasser zu dem Eingang der Ionenaustauschereinheit strömen kann, ohne durch die Regenerationseinheit zu strömen. Außerdem sind erfindungsgemäß zwei alternative Ausführungsformen vorgesehen; nämlich entweder, dass ein Frischwasseranschluss vorgesehen ist, der mit dem Eingang der Ionenaustauschereinheit verbunden ist, wobei der Ausgang der Ionenaustauschereinheit mit dem Frischwassertank und die Reinigungseinheit mit dem Frischwassertank verbunden ist, wobei ein Abwassertank in dem Gehäuse vorgesehen ist, wobei der Ausgang der Ionenaustauschereinheit mit dem Abwassertank verbunden ist und wobei ein Ventil vorgesehen ist, dass entweder die Verbindung zwischen dem Ausgang und dem Frischwassertank oder die Verbindung zwischen dem Ausgang und dem Abwassertank freigibt, oder, dass der Frischwassertank mit dem Eingang der Ionenaustauschereinheit und der Ausgang der Ionenaustauschereinheit mit der Reinigungseinheit verbunden ist, wobei ein Abwassertank in dem Gehäuse vorgesehen ist, wobei der Ausgang der Ionenaustauschereinheit mit dem Abwassertank verbunden ist und wobei ein Ventil vorgesehen ist, dass entweder die Verbindung zwischen dem Ausgang und der Reinigungseinheit oder die Verbindung zwischen dem Ausgang und dem Abwassertank freigibt.

Im Rahmen der vorliegenden Erfindung wird dabei unter einer "Ionenaustauschereinheit" eine Einrichtung verstanden, die dazu ausgestaltet ist, u.a. im Wasser enthaltene positive, Kalk bildende Ionen wie Ca⁺ und Mg⁺ gegen andere Ionen wie etwa Na⁺-Ionen auszutauschen, sodass dem Wasser die Kalkbildner Ca und Mg entzogen werden und dies somit enthärtet wird. Nach dem Durchlaufen der Ionenaustauschereinheit und dem damit verbundenen Austausch sind dann im Wasser statt der Kalkbildner in Form von CaSO₄, MgCl₂, Ca(HCO₃)₂ andere Salze vorhanden, die in Form von Na₂SO₄, 2NaCl₂ und 2NaHCO₃ vorliegen können. Dies bedeutet, dass bei diesem Verfahren die Gesamthärte des Wassers verringert wird.

In der Ionenaustauschereinheit kann das unbehandelte Frischwasser auch durch eine Kombination aus Kationentauschern und Anionentauschern geleitet werden, wobei hierfür handelsübliche Kationentauscherharze und Anionentauscherharze verwendet werden. Die im Frischwasser enthaltenen Kationen (z.B. Ca, Mg, Na, K) werden dabei durch den Kationentauscher gegen H⁺-Ionen ausgetauscht, während die Anionen (z.B. C1⁻, NO₃⁻, SO₄⁻, HCO₃⁻) durch den Anionentauscher gegen OH⁻-Ionen ausgetauscht werden. Anschließend reagieren die H⁺-Ionen und die OH⁻-Ionen miteinander und bilden Wasser (H₂O). Auch bei dieser Alternative werden dem Wasser u.a. die Kalkbildner Ca und Mg entzogen und das Wasser damit enthärtet. Hier wird sowohl die Gesamthärte als auch die elektrische Leitfähigkeit des Wassers verringert.

Dadurch, dass das behandelte Wasser, das der Reinigungseinheit zugeführt und für die Bodenreinigung verwendet wird, nahezu keine Kalkbildner mehr enthält und damit enthärtet ist, kann der Bedarf an Reinigungsmittel deutlich reduziert werden, sodass eine erheblich veringerte Reinigungsmittelkonzentration in dem Wasser ausreichend ist, ein zufriedenstellendes Reinigungsergebnis sicherzustellen. Dieser Effekt kann dabei soweit gehen, dass auf den Zusatz von Reinigungsmittel in das Wasser für die Reinigungseinheit vollständig verzichtet werden kann.

Da nunmehr Wasser mit weniger Reinigungsmittel verwendet werden kann, ist auch die Menge des auf der zu reinigenden Bodenfläche zurückbleibenden Reinigungsmittels reduziert, was wiederum dazu führt, dass auch die Haftung vermindert ist, mit der neuer Schmutz an der Bodenfläche gehalten wird. Damit ist auch die Empfänglichkeit der Bodenfläche für eine neue Verschmutzung verringert, so dass es nicht so leicht zu einer Wiederanschmutzung kommt. Reinigungsmittel verbinden sich zusammen mit im Wasser enthaltenen Kalk zu sogenannter "Kalkseife". Diese lässt sich nur mit erhöhtem Reinigungsaufwand entfernen, und sie ist auch ein Grund für die Neigung des Bodens zu schneller Neuverschmutzung. Dieses Problem verringert sich bei der erfindungsgemäßen Bodenreinigungsmaschine deutlich. Da keine Rückstände am Boden verbleiben können, wird auch die Trittsicherheit (Rutschsicherheit) erhöht.

Der Eingang der Ionenaustauschereinheit ist mit einer Regenerationseinheit verbunden, und es ist eine Bypass-Leitung vorgesehen, durch die Frischwasser zu dem Eingang der Ionenaustauschereinheit strömen kann, ohne durch die Regenerationseinheit zu strömen.

Mit einer Regenerationseinheit im Sinne der vorliegenden Erfindung kann beispielsweise die Fähigkeit der Ionenaustauschereinheit wieder hergestellt werden, Ca⁺ und Mg⁺ gegen Na⁺-Ionen oder andere Ionen auszutauschen, nachdem diese infolge eines längeren Gebrauchs verloren gegangen oder zumindest verringert ist. Dazu kann die Regenerationseinheit mit Kochsalz gefüllt sein, und dieses Kochsalz wird als Lösung oder Sole in die Ionenaustauschereinheit gespült und verbleibt dort für einen bestimmten Zeitraum. Während dieses Zeitraums gibt das Material der Ionenaustauschereinheit die aufgenommenen Ca⁺ und Mg⁺-Ionen wieder ab und nimmt stattdessen Na⁺-Ionen auf. Nachdem dieser Rückaustausch in ausreichendem Maße stattgefunden hat, wird die Ionenaustauschereinheit gespült, damit die Lösung, die nunmehr Ca⁺ und Mg⁺-Ionen enthält, aus der Ionenaustauschereinheit entfernt wird.

Durch die Bypass-Leitung wird zum einen ermöglicht, dass im Normalbetrieb unbehandeltes Frischwasser, das keine Reinigungsmittelzusätze enthält, direkt zu der Ionenaustauschereinheit gelangen kann, um dort entsprechend behandelt zu werden. Zum anderen kann aber, wenn die Bypass-Leitung verschlossen ist, Frischwasser in die Regenerationseinheit gepumpt werden, um wiederum zu erreichen, dass beispielsweise Sole in die Ionenaustauschereinheit gedrückt wird.

Insgesamt ermöglicht die Anordnung aus Regenerationseinheit und Bypass-Leitung, dass die Leistungsfähigkeit der Ionenaustauschereinheit wiederhergestellt werden kann, ohne dass Teile an der Bodenreinigungsmaschine ausgetauscht werden müssen. Es ist lediglich eine Unterbrechung des Normalbetriebs erforderlich, während der beispielsweise Sole in der Ionenaustauschereinheit reagiert. Vorzugsweise wird die Regeneration automatisch elektronisch gesteuert.

In der ersten alternativen Ausführungsform einer Bodenreinigungsmaschine gemäß der vorliegenden Erfindung ist ein Frischwasseranschluss vorgesehen, der mit dem Eingang der Ionenaustauschereinheit verbunden ist, der Ausgang der Ionenaustauschereinheit ist mit dem Frischwassertank verbunden, und die Reinigungseinheit ist wiederum mit dem Frischwassertank verbunden und diesem somit nachgeschaltet. In diesem Fall kann die Behandlung des Frischwassers durch die Ionenaustauschereinheit während des Befüllens des Frischwassertanks erfolgen, wobei das Frischwasser anschließend während des Reinigungsbetriebes aus dem Frischwassertank unmittelbar zu der Reinigungseinheit geleitet wird.

Des Weiteren ist ein Abwassertank in dem Gehäuse der Bodenreinigungsmaschine vorgesehen, wobei der Ausgang der Ionenaustauschereinheit mit dem Abwassertank verbunden ist und ein Ventil vorgesehen ist, dass entweder die Verbindung zwischen dem Ausgang und dem Frischwassertank oder die Verbindung zwischen dem Ausgang und dem Abwassertank freigibt.

Durch das Ventil wird ermöglicht, dass beim Befüllen Wasser, das durch die Ionenaustauschereinheit geströmt ist, in den Frischwassertank gelangt. Wenn jedoch die Regenerationseinheit verwendet wird, um die Ionenaustauschereinheit zu regenerieren, kann danach beim Spülen der Ionenaustauschereinheit die Spülflüssigkeit direkt in den Abwassertank geleitet werden. Diese Anordnung ermöglicht somit ein einfaches Betreiben der Regenerationseinheit.

Schließlich kann eine Reinigungsmitteldosiereinrichtung in der Verbindung zwischen dem Frischwassertank und der Reinigungseinheit zur Zugabe von Reinigungsmittel in das Frischwasser vorgesehen sein. Dies ermöglicht, dem enthärteten Wasser, sofern erforderlich, noch Reinigungsmittel zuzusetzen.

Bei der zweiten alternativen Ausführungsform einer erfindungsgemäßen Bodenreinigungsmaschine ist der Frischwassertank mit dem Eingang der Ionenaustauschereinheit verbunden, und der Ausgang der Ionenaustauschereinheit ist mit der Reinigungseinheit verbunden. Bei dieser Ausführungsform strömt Wasser aus dem Frischwassertank während des Reinigungsbetriebes ständig durch die Ionenaustauschereinheit und dann zu der Reinigungseinheit, sodass die Ionenaustauschereinheit nicht nur beim Befüllen des Frischwassertanks in Betrieb ist, wie dies bei dem vorherigen Beispiel der Fall war. Daher hat diese Anordnung den Vorteil, dass bei der Ionenaustauschereinheit der Durchfluss pro Zeiteinheit geringer ist, als bei der vorherigen Ausführungsform, bei der das Enthärten während des Betankens des Frischwassertanks erfolgt.

Des Weiteren ist auch hier ein Abwassertank in dem Gehäuse vorgesehen, wobei der Ausgang der Ionenaustauschereinheit mit dem Abwassertank verbunden ist. Außerdem ist ein Ventil vorgesehen, dass entweder die Verbindung zwischen dem Ausgang und der Reinigungseinheit oder die Verbindung zwischen dem Ausgang und dem Abwassertank freigibt. Damit kann auch bei dieser Ausführungsform einerseits Wasser durch den Ionenaustauscher zu der Reinigungseinheit geleitet werden oder andererseits nach dem Regenerieren die Spülflüssigkeit direkt zum Abwassertank geleitet werden, wobei der jeweilige Strömungsweg von der Stellung des Ventils abhängt.

In einer bevorzugten Ausführungsform ist eine Überbrückungsleitung vorgesehen, die den Frischwassertank direkt mit der Reinigungseinheit verbindet, sodass Frischwasser zu der Reiningungseinheit strömen kann, ohne die Ionenaustauschereinheit zu passieren. Dies ermöglicht, dass dann, wenn dem Frischwasser in dem Frischwassertank ein Reinigungsmittel zugegeben wird, das die Ionenaustauschereinheit schädigen würde, das Frischwasser direkt zu der Reinigungseinheit strömen kann. Damit ist die Bodenreinigungsmaschine vielseitiger einsetzbar.

Alternativ oder zusätzlich kann jedoch auch zwischen dem Ausgang der Ionenaustauschereinheit und der Reinigungseinheit eine Reinigungsmitteldosiereinrichtung vorgesehen sein.

Die Bodenreinigungsmaschine wird dadurch betrieben, dass der Reinigungseinheit Frischwasser zugeführt wird, das durch eine Ionenaustauschereinheit geströmt ist. Hierbei wird ebenfalls erreicht, dass das der Reinigungseinheit zugeführte Wasser keine Kalkbildner mehr enthält und damit enthärtet ist. Dies hat die bereits im Zusammenhang mit der erfindungsgemäßen Bodenreinigungsmaschine erläuterten Vorteile. Alternativ kann das Frischwasser vor oder nach dem Befüllen des Frischwassertanks durch die Ionenaustauschereinheit strömen. Dabei ist es auch möglich, dass die Ionenaustauschereinheit nicht in der Bodenreinigungsmaschine selbst vorgesehen ist, sondern als separate Einheit vorliegt, durch die das Frischwasser beim Betanken des Frischwassertanks strömt.

Im Folgenden wird die vorliegende Erfindung lediglich anhang bevorzugter Ausführungsbeispiele beschrieben, die in der beigefügten Zeichnung dargestellt sind, wobei
- Fig. 1: eine teilweise aufgebrochene Darstellung einer erfin- dungsgemäßen Bodenreinigungsmaschine ist,
- Fig. 2: eine perspektivische Darstellung des Wasserversor- gungssystems der Bodenreinigungsmaschine aus Fig. 1 ist,
- Fig. 3: eine schematische Darstellung des Wasserversorgungs- systems der Bodenreinigungsmaschine aus Fig. 1 ist,
- Fig. 4: eine schematische Darstellung eines ersten alternati- ven Wasserversorgungssystems für eine erfindungsgemä- ße Bodenreinigungsmaschine ist,
- Fig. 5: eine schematische Darstellung eines zweiten alterna- tiven Wasserversorgungssystems für eine erfindungsge- mäße Bodenreinigungsmaschine ist,
- Fig. 6: eine schematische Darstellung eines dritten alterna- tiven Wasserversorgungssystems für eine Bodenreinigungsmaschine ist und
- Fig. 7: eine schematische Darstellung eines Systems aus Bodenreinigungsmaschine mit eine separa- ten Ionenaustauschereinheit ist.

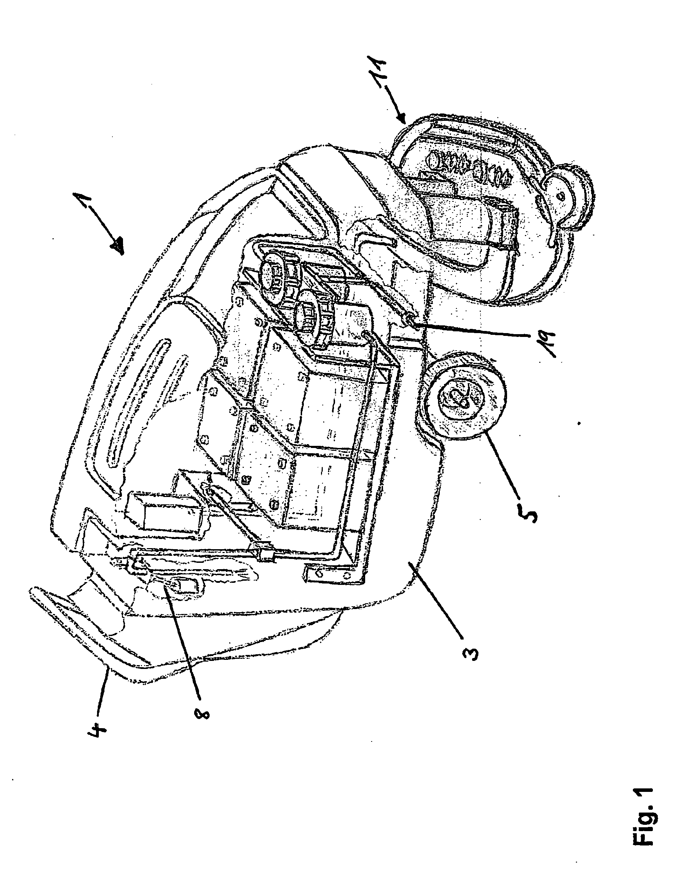

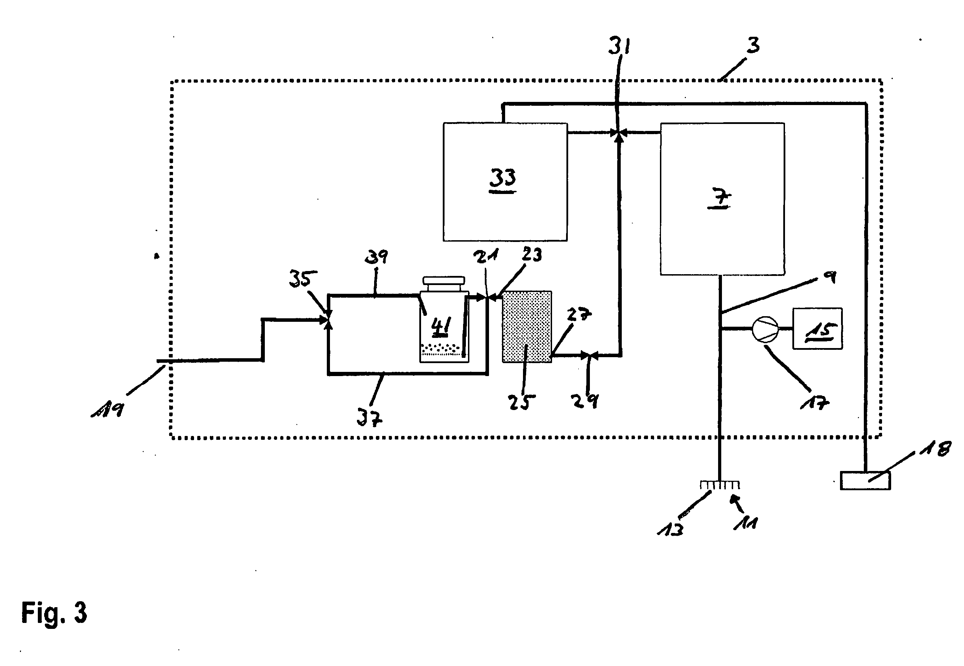

In den Fig. 1 bis 3 ist ein erstes Ausführungsbeispiel einer erfindungsgemäßen Bodenreinigungsmaschine 1 dargestellt. Dabei ist in Fig. 3 das Wasserversorgungssystem der Bodenreiningungsmaschine 1 schematisch dargestellt.

Die Bodenreiningungsmaschine 1 weist ein Gehäuse 3 auf, an dem ein Fahrwerk mit Rädern 5 vorgesehen ist. Dadurch ist es möglich, die Bodenreinigungsmaschine 1 über eine zu reinigende Bodenfläche zu bewegen, wobei die Bodenreiningüngsmaschine 1 über einen am Gehäuse 3 angebrachten Handgriff 4 geführt wird.

In dem Gehäuse 3 ist ein Frischwassertank 7 untergebracht, der ein Schwimmerventil 8 aufweist und über eine Leitung 9 mit einer am Gehäuse 3 angebrachten Reinigungseinheit 11 verbunden ist. Die Reinigungseinheit 11 weist in an sich bekannter Weise rotierende Bürsten 13 auf, die bei in Richtung auf die zu reinigenden Bodenfläche abgesenkter Reinigungseinheit 11 mit dieser in Kontakt kommen. Bei diesem bevorzugten Ausführungsbeispiel ist eine Reinigungsmitteldosiereinrichtung 15 mit der Leitung 9 verbunden, über die mittels einer Reinigungsmittelpumpe 17 ein Reinigungsmittel in das von dem Frischwassertank 7 zu der Reinigungseinheit 11 strömende Wasser gemischt werden kann. Schließlich ist üblicherweise ein Saugfuß 18 an dem Gehäuse 3 angebracht, mit dem über die Reinigungseinheit 11 auf die Bodenfläche aufgebrachtes Wasser eingesaugt werden kann.

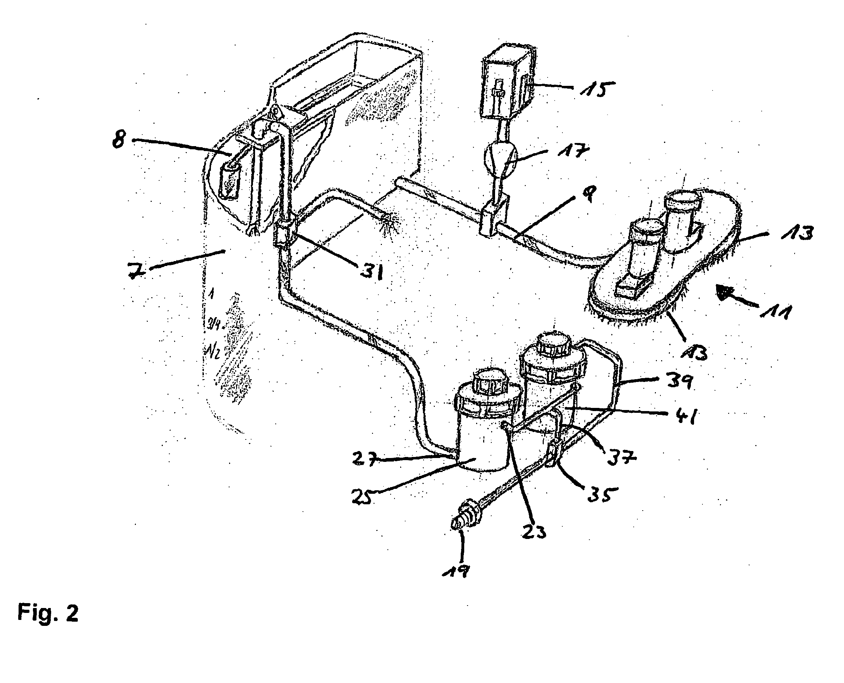

Wie insbesondere Fig. 2 zeigt, ist ein Frischwasseranschluss 19 vorgesehen, über den der Frischwassertank 7 mit Wasser befüllt werden kann. Dazu ist der Frischwasseranschluss 19 über ein Ventil 21 mit dem Eingang 23 einer Ionentauschereinheit 25 verbunden, deren Ausgang 27 wiederum über ein Ventil 29 mit einem Ventil 31 verbunden ist. Das Ventil 31 ist zum einen mit dem Frischwassertank 7 und zum anderen mit einem Abwassertank 33 verbunden, sodass das Ventil 31 derart angeordnet ist, dass es entweder die Verbindung zwischen dem Ausgang 27 und dem Frischwassertank 7 oder die Verbindung zwischen dem Ausgang 27 und dem Abwassertank 33 freigibt.

Die Ionenaustauschereinheit 25 dient dazu, das hindurchströmende Wasser zu enthärten bzw. darin enthaltene kalkbildende Ionen wie Ca⁺ oder Mg⁺ gegen andere Ionen auszutauschen. Dies kann in der Weise erfolgen, dass diese Ionen durch Na⁺-Ionen ausgetauscht werden.

Zwischen dem Frischwasseranschluss 19 und dem Ventil 21 vor der Ionentauschereinheit 25 ist ein weiteres Ventil 35 vorgesehen, von dem eine Bypass-Leitung 37 zu dem Ventil 21 vor dem Eingang 23 der Ionenaustauschereinheit 25 führt und eine weitere Leitung 39 zum Eingang einer Regenerationseinheit 41. Der Ausgang der Regenerationseinheit 41 ist schließlich mit dem Ventil 21 verbunden.

Die Regenerationseinheit 41 ermöglicht, die volle Leistungsfähigkeit der Ionenaustauschereinheit 25 wiederherzustellen, wenn diese infolge längeren Gebrauchs nicht mehr in ausreichendem Maße Ca⁺- oder Mg⁺-Ionen gegen beispielsweise Na⁺-Ionen austauscht. Dazu ist die Regenerationseinheit 41 in dem hier dargestellten bevorzugten Ausführungsbeispiel mit Regeneriersalz gefüllt, das einem langsam löslichen Kochsalz (NaCl) mit nur geringem Verunreinigungsgrad entspricht. In der Regenerationseinheit 41 befindet sich auch in Wasser aufgelöstes Salz, das als Sole bezeichnet wird. Wenn die Ventile 35 und 21 entsprechend geschaltet sind, kann Kochsalz-Lösung aus der Regnerationseinheit 41 in die Ionenaustauschereinheit 25 strömen. Anschließend werden die von dem Material der Ionenaustauschereinheit 25 während des Betriebes aufgenommenen Ca⁺- oder Mg⁺-Ionen wieder gegen Na⁺-Ionen "zurück" getauscht. In einem letzten Regenerationsschritt wird dann die Lösung, die nunmehr Ca⁺-oder Mg⁺-Ionen enthält, aus der Ionenaustauschereinheit 25 heraus und durch eine entsprechende Stellung des Ventils 31 in den Abwassertank 33 gespült.

Während die Ionenaustauschereinheit 25 im Zusammenhang mit diesem Ausführungsbeispiel als auf dem Austausch von Ca⁺- oder Mg⁺-Ionen gegen Na⁺-Ionen basierend dargestellt worden ist, ist die vorliegende Erfindung jedoch nicht auf derartige Austauschereinheiten beschränkt. Es können in gleicher Weise Austauschereinheiten verwendet werden, in denen ein Austausch der positiv geladenen Kationen, u.a. der Ca⁺- der Mg⁺-Ionen, gegen H⁺-Ionen stattfindet. Daneben findet auch ein Austausch der negativ geladenen Anionen gegen OH⁻Ionen statt. Im letzteren Beispiel lässt sich die Ionenaustauschereinheit 25 jedoch nicht in der beschriebenen, vergleichsweise einfachen Art wieder regenerieren, sodass dann die Regenerationseinheit 41 entfallen kann.

Das in den Fig. 1 bis 3 dargestellte Ausführungsbeispiel einer Bodenreinigungsmaschine 1 kann in folgender Weise betrieben werden.

Zunächst wird die Bodenreinigungsmaschine 1 mittels des Frischwasseranschlusses 19 an eine Wasserversorgung angeschlossen, und die Ventile 35 und 21 werden derart geschaltet, dass das Wasser vom Frischwasseranschluss 19 durch die Bypass-Leitung 37 zum Eingang 23 der Ionenaustauschereinheit 25 strömt. Das Wasser passiert die Ionenaustauschereinheit 25 und wird dabei durch den Austausch der Kalk bildenden Ca⁺- oder Mg⁺-Ionen gegen Na⁺-Ionen enthärtet. Das Ventil 31 ist derart geschaltet, dass das enthärtete Wasser in den Frischwassertank 7 strömen kann. Der Befüllvorgang wird dann gestoppt, wenn das Schwimmerventil 8 bei Erreichen des vorgesehenen oberen Füllstandes schließt.

Nach dem Befüllen des Frischwassertanks 7 kann die Bodenreinigungsmaschine 1 zum Reinigen einer Bodenfläche eingesetzt werden, wobei Frischwasser aus dem Frischwassertank 7 über die Leitung 9 zu der Reinigungseinheit 11 geleitet wird. Dabei kann, sofern erforderlich, dem Frischwasser über die Reiningungsmitteldosiereinheit 15 Reinigungsmittel zugesetzt werden. Allerdings ist aufgrund der vorherigen Enthärtung bzw. dem Austausch der Kalkbildner der Bedarf an Reinigungsmittel stark reduziert, und in vielen Fällen kann auf die Reinigungsmittelzugabe vollständig verzichtet werden.

Während des Reinigungsvorgangs wird das über die Reinigungseinheit 11 aufgebrachte Wasser über den Saugfuß 18 wieder eingesaugt und in den Abwassertank 33 gefördert.

Nach einer bestimmten Durchflussmenge, die abhängig ist von der Wasserhärte des zugeführten Leitungswassers, kann es erforderlich werden, das Material der Ionenaustauschereinheit 25 zu regenerieren, da dessen Fähigkeit, Ca⁺- oder Mg⁺-Ionen auszutauschen nachlässt. Dazu wird die Bodenreinigungsmaschine 1 über den Frischwasseranschluss 19 mit einer Wasserversorgung verbunden, und die Ventile 35 und 21 werden so geschaltet, dass Wasser in die Regenerationseinheit 41 strömt und über den Ausgang der Regenerationseinheit 41 Na⁺-haltige Sole in die Ionenaustauschereinheit 25 drückt. Anschließend muss die Sole über einen bestimmten Zeitraum, nämlich der Regenerationszeit, in der Ionenaustauschereinheit 25 verbleiben, währenddessen die Ca⁺- oder Mg⁺-Ionen gegen Na⁺-Ionen zurückgetauscht werden.

Anschließend werden die Ventile 35 und 21 so geschaltet, dass Wassser von dem Frischwasseranschluss 19 über die Bypass-Leitung 37 zum Spülen direkt in die Ionenaustauschereinheit 25 strömen kann. Ferner wird das Ventil 31 so geschaltet, dass das Spülwasser weiter in den Abwassertank 33 strömt. Nach Abschluss des Spülvorganges kann die Bodenreiniungsmaschine dann wieder in der bereits beschriebenen Weise betankt und betrieben werden.

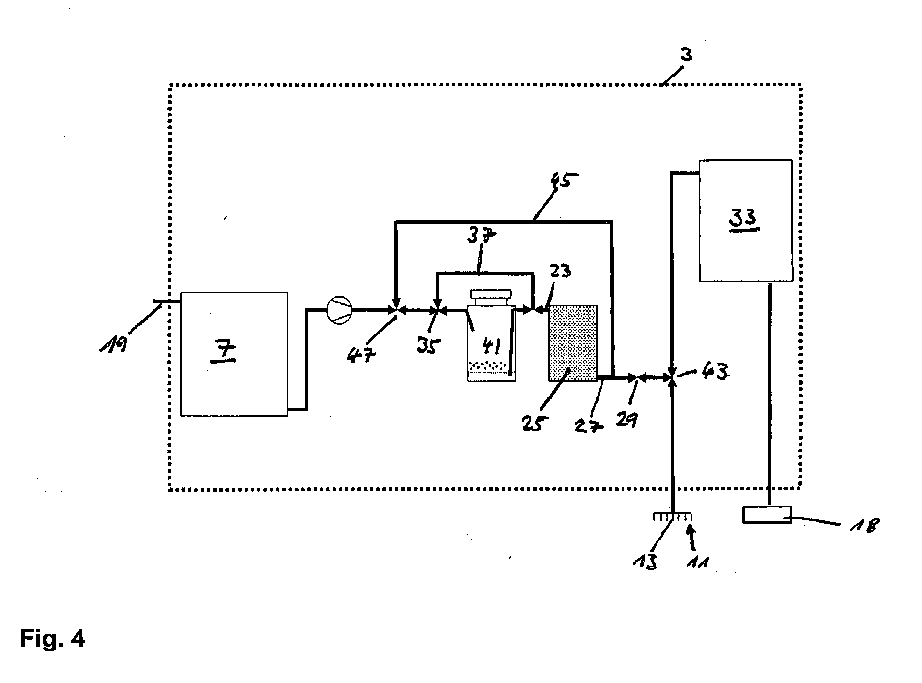

Fig. 4 zeigt schematisch den Aufbau des Wasserversorgungssystems eines zweiten Ausführungsbeispiels einer erfindungsgemäßen Bodenreinigungsmaschine mit einem Gehäuse 3. Bei diesem Ausführungsbeispiel ist der Frischwasseranschluss 19 direkt mit dem Frischwassertank 7 verbunden.

Zwischen dem Frischwassertank 7 und der Reinigungseinheit 11 sind wieder die bereits beschriebene Regenerationseinheit 41 und Ionenaustauschereinheit 25 vorgesehen, wobei der Frischwassertank 7 über die Bypass-Leitung 37 direkt mit dem Eingang 23 der Ionenaustauschereinheit 25 verbunden ist. Schließlich ist der Ausgang 27 der Ionenaustauschereinheit 25 über das Ventil 43 mit der Reinigungseinheit 11 verbunden. Das Ventil 43 ist außerdem mit dem Abwassertank 33 verbunden, sodass das Ventil 43 vorgesehen ist, dass es entweder die Verbindung zwischen dem Ausgang 27 und der Reinigungseinheit 11 oder die Verbindung zwischen dem Ausgang 27 und dem Abwassertank 33 freigibt.

Außerdem weist dieses Ausführungsbeispiel noch eine Überbrückungsleitung 45 auf, die den Frischwassertank 7 direkt mit dem Ventil 43 und damit der Reinigungseinheit 41 verbindet, sodass Frischwasser zu der Reinigungseinheit 11 strömen kann, ohne die Ionenaustauschereinheit 25 zu passieren.

Im Reinigungsbetrieb strömt bei dieser Ausführungsform Wasser aus dem Frischwassertank 7 ständig durch die Bypass-Leitung 37 und die Ionenaustauschereinheit 25 und dann über das entsprechend geschaltete Ventil 43 zu der Reinigungseinheit 11, sodass die Ionenaustauschereinheit 25 nicht lediglich beim Befüllen des Frischwassertanks 7 in Betrieb ist, wie dies bei dem vorherigen Beispiel der Fall war. Daher hat diese Anordnung den Vorteil, dass der Durchfluss pro Zeiteinheit durch die Ionenaustauschereinheit 25 hier geringer ist. Trotzdem ergibt sich auch hier der Vorteil, dass das der Reinigungseinheit 11 zugeführte Wasser enthärtet ist und damit zu einem besseren Reinigungsergebnis führt.

Des Weiteren ermöglicht die Überbrückungsleitung 45, dass dann, wenn dem Frischwasser in dem Frischwassertank 7 ein Reinigungsmittel zugegeben wird, das die Ionenaustauschereinheit 25 schädigen würde, das Frischwasser direkt zu der Reinigungseinheit 11 strömen kann. In diesem Fall wird das der Reinigungseinheit 11 zugeführte Wasser zwar nicht enthärtet, aber die Bodenreinigungsmaschine 1 ist vielseitiger einsetzbar.

Wenn bei diesem Ausführungsbeispiel die Ionenaustauschereinheit 25 regeneriert werden muss, werden die Ventile 47 und 35 so geschaltet, dass Frischwasser aus dem Frischwassertank 7 in die Regenerationseinheit 41 strömt und Sole daraus in die Ionenaustauschereinheit 25 drückt. Nachdem der bereits beschriebene Austauschprozess zwischen Ca⁺ und Mg⁺ einerseits und Na⁺ andererseits stattgefunden hat, wird die Ionenaustauschereinheit 25 über die Bypass-Leitung 37 gespült, wobei das Spülwasser über das entsprechend geschaltete Ventil 43 in den Abwassertank 33 geleitet wird.

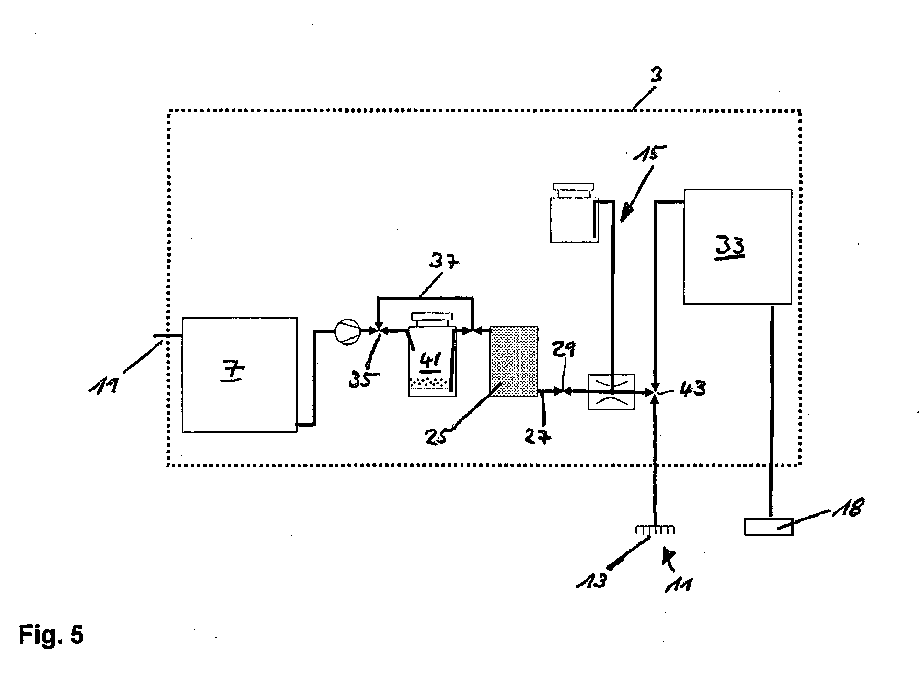

Das in Fig. 5 dargestellte Ausführungsbeispiel unterscheidet sich von dem in Fig. 4 dargestellten dadurch, dass hier keine Überbrückungsleitung 45 vorgesehen ist, sondern eine Reinigungsmitteldosiereinrichtung 15, über die dem Wasser, das bereits die Ionenaustauschereinheit 25 durchlaufen hat, bei Bedarf ein Reinigungsmittel zugestzt werden kann. Ansonsten unterscheidet sich der Betrieb dieses Ausführungsbeispiels nicht von dem des Vorherigen. An dieser Stelle ist jedoch daraufhinzuweisen, dass die Ausführungsbeispiele gemäß den Fig. 4 und 5 auch miteinander kombiniert werden können, sodass sowohl eine Überbrückungsleitung 45 als auch eine Reinigungsmitteldosiereinrichtung 15 vorgesehen sind.

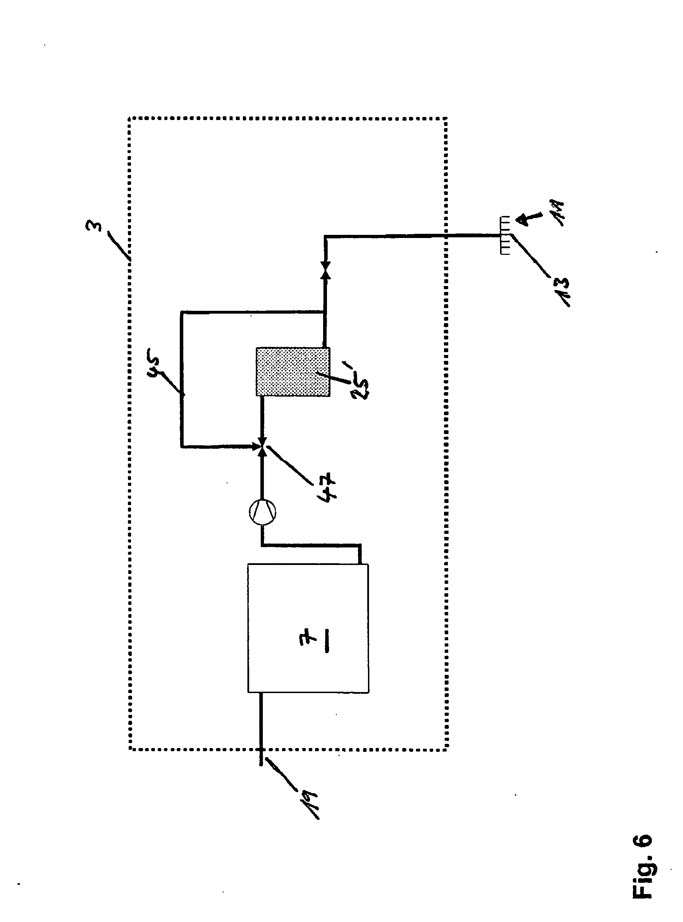

Das in Fig. 6 dargestellte, allerdings nicht von Ansprüchen 1 und 3 abgedeckte Ausführungsbeispiel unterscheidet sich von dem in Zusammenhang mit Fig. 4 beschriebenen dadurch, dass hier keine Regenerationseinheit vorgesehen ist, sondern die Ionenaustauschereinheit 25' ausgetauscht werden muss, wenn deren Fähigkeit zum Ionenaustausch zu stark abgenommen hat, die Einheit also verbraucht ist. Ferner wird im Betrieb auch hier das Wasser aus dem Frischwassertank 7 durch die Ionenaustauschereinheit 25 zu der Reinigungseinheit 11 geführt und damit enthärtet, und auch bei diesem Ausführungsbeispiel ist eine Überbrückungsleitung 45 vorgesehen, die ermöglicht, die Ionenaustauschereinheit 25 zu umgehen, wenn dem Wasser in dem Frischwassertank 7 ein Reinigungsmittel zugesetzt ist.

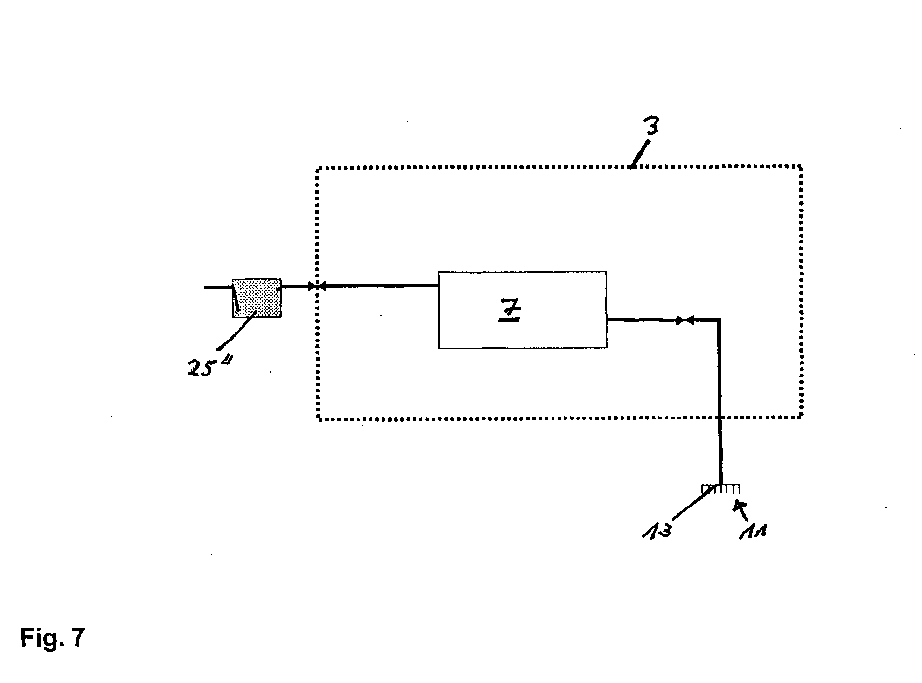

Schließlich zeigt Fig. 7 ein nicht von Ansprüchen 1 und 3 abgedecktes Ausführungsbeispiel, bei dem Ionenaustauschereinheit 25" nicht innerhalb des Gehäuses 3 der Bodenreinigungsmaschine 1 angeordnet ist, sondern als externe Vorrichtung vorgesehen ist. Hier wird die Ionenaustauschereinheit 25" dann durchströmt, wenn der Frischwassertank 7 in der Bodenreinigungsmaschine betankt wird, sodass die Betriebsweise im Wesentlichen der entspricht, die im Zusammenhang mit dem Ausführungsbeispiel gemäß den Fig. 1 bis 3 beschrieben worden ist.

Bei den zuvor beschriebenen Ausführungsbeispielen für eine erfindungsgemäße Bodenreinigungsmaschine wird der Reinigungseinheit jeweils Frischwasser zugeführt, das zuvor durch eine Ionenaustauschereinheit geströmt ist. Dadurch enthält das zugeführte Wasser, das für die Bodenreinigung verwendet wird, nahezu keine Kalkbildner mehr und ist damit enthärtet. Daher kann der Bedarf an Reinigungsmittel deutlich reduziert werden, sodass eine erheblich veringerte Reinigungsmittelkonzentration in dem Wasser ausreichend ist, ein zufriedenstellendes Reinigungsergebnis sicherzustellen. Dieser Effekt kann dabei soweit gehen, dass auf den Zusatz von Reinigungsmittel in das Wasser vollständig verzichtet werden kann.

## Patentansprüche

1. Bodenreinigungsmaschine mit
einem Gehäuse (3), an dem ein Fahrwerk vorgesehen ist zum Bewegen der Maschine über eine zu reinigende Bodenfläche, einem in dem Gehäuse (3) untergebrachten Frischwassertank (7),
einer an dem Gehäuse (3) angebrachten Reinigungseinheit (11), die ausgestaltet ist, in Kontakt mit der zu reinigenden Bodenfläche zu kommen,
wobei die Reinigungseinheit (11) mit dem Frischwassertank (7) verbunden ist,
wobei eine Ionenaustauschereinheit (25, 25', 25") vorgesehen ist, die mit dem Frischwassertank (7) verbunden ist und von einem Eingang (23) zu einem Ausgang (27) von Frischwasser durchströmt wird, **dadurch gekennzeichnet,**
**dass** der Eingang (23) der Ionenaustauschereinheit (25, 25', 25") mit einer Regenerationseinheit (41) verbunden ist,
**dass** eine Bypass-Leitung (37) vorgesehen ist, durch die Frischwasser zu dem Eingang (23) der Ionenaustauschereinheit (25, 25', 25") strömen kann, ohne durch die Regenerationseinheit (41) zu strömen, und
**dass** ein Frischwasseranschluss (19) vorgesehen ist, der mit dem Eingang (23) der Ionenaustauschereinheit (25, 25', 25") verbunden ist,
wobei der Ausgang (27) der Ionenaustauschereinheit (25, 25', 25") mit dem Frischwassertank (7) und die Reinigungseinheit (11) mit dem Frischwassertank (7) verbunden ist,
wobei ein Abwassertank (33) in dem Gehäuse (3) vorgesehen ist,
wobei der Ausgang (27) der Ionenaustauschereinheit (25, 25', 25") mit dem Abwassertank (33) verbunden ist und
wobei ein Ventil (31) vorgesehen ist, das entweder die Verbindung zwischen dem Ausgang (27) und dem Frischwassertank (7) oder die Verbindung zwischen dem Ausgang (27) und dem Abwassertank (33) freigibt.

2. Bodenreinigungsmaschine nach Anspruch 1, **dadurch gekennzeichnet, dass** eine Reinigungsmitteldosiereinrichtung (15) in der Verbindung (9) zwischen dem Frischwassertank (7) und der Reinigungseinheit (11) zur Zugabe von Reinigungsmittel in das Frischwasser vorgesehen ist.

3. Bodenreinigungsmaschine mit
einem Gehäuse (3), an dem ein Fahrwerk vorgesehen ist zum Bewegen der Maschine über eine zu reinigende Bodenfläche, einem in dem Gehäuse (3) untergebrachten Frischwassertank (7),
einer an dem Gehäuse (3) angebrachten Reinigungseinheit (11), die ausgestaltet ist, in Kontakt mit der zu reinigenden Bodenfläche zu kommen,
wobei die Reinigungseinheit (11) mit dem Frischwassertank (7) verbunden ist,
wobei eine Ionenaustauschereinheit (25, 25', 25") vorgesehen ist, die mit dem Frischwassertank (7) verbunden ist und von einem Eingang (23) zu einem Ausgang (27) von Frischwasser durchströmt wird, **dadurch gekennzeichnet,**
**dass** der Eingang (23) der Ionenaustauschereinheit (25, 25', 25") mit einer Regenerationseinheit (41) verbunden ist,
**dass** eine Bypass-Leitung (37) vorgesehen ist, durch die Frischwasser zu dem Eingang (23) der Ionenaustauschereinheit (25, 25', 25") strömen kann, ohne durch die Regenerationseinheit (41) zu strömen, und
**dass** der Frischwassertank (7) mit dem Eingang (23) der Ionenaustauschereinheit (25, 25', 25") und der Ausgang (27) der Ionenaustauschereinheit (25, 25', 25") mit der Reinigungseinheit (11) verbunden ist,
wobei ein Abwassertank (33) in dem Gehäuse (3) vorgesehen ist,
wobei der Ausgang (27) der Ionenaustauschereinheit (25, 25', 25") mit dem Abwassertank (33) verbunden ist und
wobei ein Ventil (43) vorgesehen ist, das entweder die Verbindung zwischen dem Ausgang (27) und der Reinigungseinheit (11) oder die Verbindung zwischen dem Ausgang (27) und dem Abwassertank (33) freigibt.

4. Bodenreinigungsmaschine nach Anspruch 3, **dadurch gekennzeichnet, dass** eine Überbrückungsleitung (45) vorgesehen ist, die den Frischwassertank (7) direkt mit der Reinigungseinheit (11) verbindet, sodass Frischwasser zu der Reinigungseinheit (11) strömen kann, ohne die Ionenaustauschereinheit (25, 25', 25") zu passieren.

5. Bodenreinigungsmaschine nach Anspruch 3 oder 4, **dadurch gekennzeichnet, dass** zwischen dem Ausgang (27) der Ionenaustauschereinheit (25, 25', 25") und der Reinigungseinheit (11) eine Reinigungsmitteldosiereinrichtung (15) vorgesehen ist.

## Claims

1. Floor cleaning machine comprising:
a housing (3) on which a carriage is provided for moving the machine over a floor surface to be cleaned,
a fresh-water tank (7) which is accommodated in the housing (3),
a cleaning unit (11) which is attached to the housing (3) and is designed to come into contact with the floor surface to be cleaned,
the cleaning unit (11) being connected to the fresh-water tank (7),
an ion-exchanger unit (25, 25', 25") being provided which is connected to the fresh-water tank (7) and is flowed through by fresh water from an inlet (23) to an outlet (27), **characterized in**
**that** the inlet (23) of the ion-exchanger unit (25, 25', 25") is connected to a regeneration unit (41),
**that** a bypass line (37) is provided through which fresh water can flow to the inlet (23) of the ion-exchanger unit (25, 25', 25") without flowing through the regeneration unit (41), and
**that** a fresh-water connection (19) is provided which is connected to the inlet (23) of the ion-exchanger unit (25, 25', 25"),
the outlet (27) of the ion-exchanger unit (25, 25', 25") being connected to the fresh-water tank (7) and the cleaning unit (11) being connected to the fresh-water tank (7),
a waste-water tank (33) being provided in the housing (3),
the outlet (27) of the ion-exchanger unit (25, 25', 25") being connected to the waste-water tank (33), and
a valve (31) being provided which either opens the connection between the outlet (27) and the fresh-water tank (7) or the connection between the outlet (27) and the waste-water tank (33).

2. Floor cleaning machine according to claim 1, **characterized in that** a cleaning agent metering device (15) is provided in the connection (9) between the fresh-water tank (7) and the cleaning unit (11) for adding cleaning agent to the fresh water.

3. Floor cleaning machine comprising:
a housing (3) on which a carriage is provided for moving the machine over a floor surface to be cleaned,
a fresh-water tank (7) which is accommodated in the housing (3),
a cleaning unit (11) which is attached to the housing (3) and is designed to come into contact with the floor surface to be cleaned,
the cleaning unit (11) being connected to the fresh-water tank (7),
an ion-exchanger unit (25, 25', 25") being provided which is connected to the fresh-water tank (7) and is flowed through by fresh water from an inlet (23) to an outlet (27), **characterized in**
**that** the inlet (23) of the ion-exchanger unit (25, 25', 25") is connected to a regeneration unit (41),
**that** a bypass line (37) is provided through which fresh water can flow to the inlet (23) of the ion-exchanger unit (25, 25', 25") without flowing through the regeneration unit (41), and
**that** the fresh-water tank (7) is connected to the inlet (23) of the ion-exchanger unit (25, 25', 25") and that the outlet (27) of the ion-exchanger unit (25, 25', 25") is connected to the cleaning unit (11),
a waste-water tank (33) being provided in the housing (3),
the outlet (27) of the ion-exchanger unit (25, 25', 25'') being connected to the waste-water tank (33), and
a valve (43) being provided which either opens the connection between the outlet (27) and the cleaning unit (11) or the connection between the outlet (27) and the waste-water tank (33).

4. Floor cleaning machine according to claim 3, **characterized in that** a bridging line (45) is provided, connecting the fresh-water tank (7) directly to the cleaning unit (11) so that fresh water can flow to the cleaning unit (11) without passing through the ion-exchanger unit (25, 25', 25").

5. Floor cleaning machine according to claim 3 or claim 4, **characterized in that** a cleaning agent metering device (15) is provided between the outlet (27) of the ion-exchanger unit (25, 25', 25") and the cleaning unit (11).

## Revendications

1. Machine de nettoyage du sol, comprenant :
un logement (3) sur lequel est prévu un mécanisme de roulement pour déplacer la machine sur une surface de sol à nettoyer,
un réservoir d'eau fraîche (7) incorporé au logement (3),
une unité de nettoyage (11) montée sur le logement (3), laquelle unité est conformée pour venir en contact avec la surface de sol à nettoyer,
dans laquelle l'unité de nettoyage (11) est reliée au réservoir d'eau fraîche (7),
dans laquelle il est prévu une unité d'échange d'ions (25, 25', 25") qui est reliée au réservoir d'eau fraîche (7) et est traversée par de l'eau fraîche d'une entrée (23) à une sortie (27), **caractérisée en ce que**
l'entrée (23) de l'unité d'échange d'ions (25, 25', 25") est reliée à une unité de régénération (41),
il est prévu une conduite de dérivation (37) par laquelle de l'eau fraîche peut s'écouler vers l'entrée (23) de l'unité d'échange d'ions (25, 25', 25") sans s'écouler à travers l'unité de régénération (41), et
il est prévu une prise d'eau fraîche (19) qui est reliée à l'entrée (23) de l'unité d'échange d'ions (25, 25', 25"),
dans laquelle la sortie (27) de l'unité d'échange d'ions (25, 25', 25") est reliée au réservoir d'eau fraîche (7), et l'unité de nettoyage (11) est reliée au réservoir d'eau fraîche (7),
dans laquelle il est prévu un réservoir d'eaux usées (33) dans le logement (3),
dans laquelle la sortie (27) de l'unité d'échange d'ions (25, 25', 25") est reliée au réservoir d'eaux usées (33), et
dans laquelle il est prévu une soupape (31) qui déclenche soit la liaison entre la sortie (27) et le réservoir d'eau fraîche (7) soit la liaison entre la sortie (27) et le réservoir d'eaux usées (33).

2. Machine de nettoyage du sol selon la revendication 1, **caractérisée en ce qu'**il est prévu un dispositif de dosage de produit nettoyant (15) dans la liaison (9) entre le réservoir d'eau fraîche (7) et l'unité de nettoyage (11) pour l'ajout de produit nettoyant dans l'eau fraîche.

3. Machine de nettoyage du sol, comprenant :
un logement (3) sur lequel il est prévu un mécanisme de roulement pour déplacer la machine sur une surface de sol à nettoyer,
un réservoir d'eau fraîche (7) incorporé au logement (3),
une unité de nettoyage (11) montée sur le logement (3), laquelle unité est conformée pour venir en contact avec la surface de sol à nettoyer,
dans laquelle l'unité de nettoyage (11) est reliée au réservoir d'eau fraîche (7),
dans laquelle il est prévu une unité d'échange d'ions (25, 25', 25") qui est reliée au réservoir d'eau fraîche (7) et est traversée par de l'eau fraîche d'une entrée (23) à une sortie (27), **caractérisée en ce que**
l'entrée (23) de l'unité d'échange d'ions (25, 25', 25") est reliée à une unité de régénération (41),
il est prévu une conduite de dérivation (37) par laquelle de l'eau fraîche peut s'écouler vers l'entrée (23) de l'unité d'échange d'ions (25, 25', 25") sans s'écouler à travers l'unité de régénération (41), et
le réservoir d'eau fraîche (7) est relié à l'entrée (23) de l'unité d'échange d'ions (25, 25', 25"), et la sortie (27) de l'unité d'échange d'ions (25, 25', 25") est reliée à l'unité de nettoyage (11),
dans laquelle il est prévu un réservoir d'eaux usées (33) dans le logement (3),
dans laquelle la sortie (27) de l'unité d'échange d'ions (25, 25', 25") est reliée au réservoir d'eaux usées (33), et
dans laquelle il est prévu une soupape (43) qui déclenche soit la liaison entre la sortie (27) et l'unité de nettoyage (11) soit la liaison entre la sortie (27) et le réservoir d'eaux usées (33).

4. Machine de nettoyage du sol selon la revendication 3, **caractérisée en ce qu'**il est prévu une conduite de pontage (45) qui relie le réservoir d'eau fraîche (7) directement à l'unité de nettoyage (11) de sorte que de l'eau fraîche puisse s'écouler jusqu'à l'unité de nettoyage (11) sans passer par l'unité d'échange d'ions (25, 25', 25").

5. Machine de nettoyage du sol selon la revendication 3 ou 4, **caractérisée en ce qu'**il est prévu un dispositif (15) de dosage de produit nettoyant entre la sortie (27) de l'unité d'échange d'ions (25, 25', 25") et l'unité de nettoyage (11).
